# EUROPÄISCHE PATENTSCHRIFT

(11) **EP 2 803 454 B1**
(45) Veröffentlichungstag und Bekanntmachung des Hinweises auf die Patenterteilung: **21.12.2016**
(21) Anmeldenummer: 14168791.3
(22) Anmeldetag: 19.05.2014
(51) Int. Cl.: B25J 19/06

(54) **Überlastschutzeinrichtung**
Overload protection device
Dispositif contre les surcharges

(30) Priorität: 17.05.2013 DE 102013209239
(43) Veröffentlichungstag der Anmeldung: 19.11.2014
(73) Patentinhaber: Schunk GmbH & Co. KG Spann- und Greiftechnik, 74348 Lauffen am Neckar (DE)
(72) Erfinder: Becker, Ralf, 71672 Marbach (DE); Winkler, Ralf, 74226 Nordheim (DE); Barta, Daniel, 74629 Pfedelbach (DE)
(74) Vertreter: DREISS Patentanwälte PartG mbB

(56) Entgegenhaltungen:
- EP-A1- 0 264 612
- EP-A1- 2 169 356
- WO-A1-2011/029114
- DE-A1- 3 003 990
- US-A1- 2005 184 038

## Beschreibung

Die Erfindung betrifft eine Überlastschutzeinrichtung mit einem Gehäuse, das für eine Befestigung an einem Handhabungsgerät bzw. eines Werkzeugs vorgesehen ist, mit einem beweglich an dem Gehäuse angebrachten Halter zur Befestigung eines Werkzeugs bzw. an einem Handhabungsgerät, mit einer Vorspanneinrichtung zur Erzeugung einer Vorspannkraft zwischen Gehäuse und Halter, die den Halter in einer Grundstellung hält, und mit einer Schalteinrichtung, mit der dann ein Schaltsignal erzeugbar ist, wenn der Halter seine Grundstellung verlässt.

Überlastschutzeinrichtungen sind aus dem Stand der Technik bekannt und werden bei fremdkraftbetriebenen Handhabungsgeräten, beispielsweise bei achs- oder bahngesteuerten Industrierobotern, zur Vermeidung von Schäden bei Kollisionen im Rahmen von Bewegungen zwischen dem Handhabungsgerät und Gegenständen in der Umgebung des Handhabungsgerätes eingesetzt. Dazu weist eine Überlastschutzeinrichtung ein Gehäuse auf, das an dem Handhabungsgerät, beispielsweise an einem Aufnahmeflansch eines Roboterarms, befestigt werden kann. An dem Gehäuse ist ein Werkzeughalter, beispielsweise in Form eines Werkzeugflansches, vorgesehen, der zur Aufnahme von Handhabungswerkzeugen, beispielsweise Greifeinrichtungen, Bearbeitungseinrichtungen, Messeinrichtungen, ausgebildet ist. Der Werkzeughalter ist dabei beweglich mit dem Gehäuse verbunden, so dass eine Relativbewegung zwischen dem Gehäuse und dem Werkzeughalter, insbesondere in Form einer Auslenkung des Werkzeughalters, ermöglicht ist. Dabei können lineare und/oder rotatorische Relativbewegungen abhängig von einem Anwendungsbereich der an dem Werkzeughalter angebrachten Handhabungswerkzeuge vorgesehen sein. Die Relativbewegungen können durch konstruktive Gegebenheiten des Gehäuses und des daran angebrachten Werkzeughalters begrenzt sein. Um unerwünschte Relativbewegungen zu verhindern, ist eine Vorspanneinrichtung vorgesehen, die zwischen dem Gehäuse und dem Werkzeughalter eine Vorspannkraft aufbringt, so dass eine Relativbewegung erst bei Überwindung der Vorspannkraft stattfinden kann. Somit tritt bei einer Kollision des Handhabungswerkzeugs mit einem Gegenstand zunächst nur eine durch eine Höhe der Vorspannkraft bestimmte Kollisionskraft auf. Da gegebenenfalls nicht ausgeschlossen werden kann, dass ein zur Verfügung stehender Bewegungsspielraum der Relativbewegung zwischen Gehäuse und Werkzeughalter ausreicht, um die von dem Handhabungsgerät ausgeführte Bewegung vollständig abzufangen, ist zwischen dem Gehäuse und dem Werkzeughalter eine Schalteinrichtung vorgesehen, die bei einer Mindestauslenkung des Werkzeughalters gegenüber dem Gehäuse ein Schaltsignal erzeugt, das an eine Steuerungseinrichtung des Handhabungsgeräts weitergeleitet werden kann, um die Bewegungen des Handhabungsgeräts zu stoppen und gegebenenfalls in entgegengesetzter Richtung zu verfahren.

Eine bekannte Ausführungsform einer Überlastschutzeinrichtung ist das Modell OPS 80 der Anmelderin, die in gängigen Katalogmaterialien dargestellt ist. Der OPS 80 weist ein zylindrisches Gehäuse mit Befestigungsbohrungen für eine Montage an einen Industrieroboter auf. An dem zylindrischen Gehäuse ist ein ebenfalls zylindrischer Werkzeughalter angebracht, der linear verschieblich und drehbar befestigt ist. Der Werkzeughalter kann über einen Druckkolben oder über Federmittel mit einer Vorspannkraft beaufschlagt werden und ermöglicht somit die Übertragung eines konstruktiv begrenzten Drehmoments bzw. einer entsprechenden Kraft, was zur Benutzung eines an dem Werkzeughalter angebrachten Werkzeugs notwendig ist. An einer dem Werkzeughalter zugewandten Stirnseite des Gehäuses sind jeweils um 120 Grad versetzt angeordnete induktive Näherungsschalter angeordnet, die im Fall einer Kollision und einer dadurch bewirkten Annäherung des Werkzeughalters an das Gehäuse ein Schaltsignal auslösen können und somit die Bewegungen des Handhabungsgeräts stoppen können.

Aus der US 4,717,003 ist eine Überlastschutzeinrichtung bekannt geworden, die zur Erzeugung einer Vorspannkraft Federelemente vorsieht. Über Sensoren wird dabei der Abstand zwischen dem Gehäuse und einer Werkzeugplatte bestimmt. Wird ein vorgegebener Abstand überschritten, so wird ein Signal ausgegeben.

Aus der DD 252 512 A3 ist ein Adapter mit Kollisionsschutz bekannt geworden, der ein Grundgehäuse vorsieht. Im Grundgehäuse ist ein Druckvolumen angeordnet, das mittels einer Membran abgedichtet ist. Bei Abheben eines Flansches von Arretierungsmitteln wird über einen Sensor ein Signal abgegeben.

Aus der DE 30 03 990 ist eine lösbare Haltevorrichtung bekannt geworden, bei der Magnete als Haltemittel Verwendung finden.

Weitere Überlastschutzeinrichtungen sind beispielsweise aus der EP 1 740 353 A1 bekannt.

Bei derartigen Einrichtungen hat sich die Funktionssicherheit als problematisch herausgestellt. Insbesondere für den Fall, dass an der Schalteinrichtung Beschädigungen auftreten und diese, oder Teile davon, ausgetauscht werden müssen. Zudem benötigen die bekannten Einrichtungen Versorgungsleitungen zur Versorgung der Vorspanneinrichtung mit Vorspannenergie, insbesondere bei Verwendung von Druckmitteln.

Der vorliegenden Erfindung liegt die Aufgabe zugrunde, eine Überlastschutzeinrichtung derart auszugestalten, dass die genannten Nachteile überwunden werden.

Diese Aufgabe wird mit einer Überlastschutzeinrichtung mit den Merkmalen des Anspruchs 1 gelöst. Insbesondere sind der eine Magnetleiter und die Magnete, die das Magnetfeld des Magnetleiters beeinflussen, sowie auch der Magnetfeldsensor am Gehäuse angeordnet.

Die Schalteinrichtung der Überlastschutzeinrichtung umfasst vorzugsweise lediglich einen Magnetfeldsensor, der dann ein Schaltsignal erzeugt, wenn der Halter seine Grundstellung verlässt. Auf Grund der Verwendung der Magnete bildet sich in der Grundstellung ein weitgehend stabiles Magnetfeld am Magnetleiter aus. Verlässt der Halter seine Grundstellung, dann verändert sich dieses Magnetfeld. Durch Vorsehen eines Magnetfeldsensors am insbesondere Grundgehäuse, kann eine dabei auftretende Änderung des Magnetfelds erfasst werden; eine derartige Änderung des Magnetfelds führt zur Erzeugung des Schaltsignals.

Dabei ist vorteilhaft, wenn die Magnete am Gehäuse angeordnet sind und dass am Gehäuse der von den Magneten magnetisierte, insbesondere umlaufende Magnetleiter vorgesehen ist, über den der Magnetfeldsensor beim Verlassen der Grundstellung des Halters eine Magnetfeldänderung erfasst. Der Magnetleiter, der insbesondere als umlaufender Stahlring ausgebildet sein kann, dient dabei zur gleichmäßigen Verteilung des Magnetfelds um das Grundgehäuse. Der Magnetfeldschalter sitzt dann vorzugsweise in der Nähe dieses Magnetleiters. Bei Verlassen der Grundstellung des Halters ändert sich das Magnetfeld und kann fern von einem Magneten angeordnet sein. Die Änderung des Magnetfelds an den Haltemagneten hat dabei Einfluss auf die Änderung des Magnetfelds des Magnetfeldleiters. Eine derartige Änderung kann vom mit dem Magnetleiter zusammenwirkenden Magnetfeldschalter detektiert werden, was zur Auslösung des Schaltsignals führt.

Der Magnetleiter ist vorzugsweise umlaufend und/oder ringartig ausgebildet, wobei die die Magnete auf einer Kreisbahn um die Mittellängsachse des Gehäuses angeordnet sein können. Die Magnete können dabei radial innen und/oder radial außen, um den Magnetleiter herum angeordnet sind.

Insbesondere hat sich als vorteilhaft herausgestellt, wenn die Haltemagnete auf einer Kreisbahn um die Mittellängsachse des Gehäuses, und insbesondere, falls vorhanden, um den Mittendurchbruch herum angeordnet sind. Die Anordnung ist insbesondere derart, dass egal aus welcher Richtung ein auf den Kolbenschaft wirkendes Kippmoment auftritt, die Kraft, die erforderlich ist, um den Halter aus seiner Grundstellung zu drängen, im Wesentlichen gleich groß ist.

Vorteilhaft ist zudem, wenn die Magnete als Haltemagnete der Vorspanneinrichtung ausgebildet sind, die den Halter in der Grundstellung halten. Die Vorspannkraft kann dabei ausschließlich durch die Haltemagnete bewirkt werden.

Allerdings ist auch denkbar, dass anstelle oder neben den Haltemagneten weitere Vorspannmittel denkbar sind, beispielsweise Federelemente und/oder entsprechend mit Druck beaufschlagte Druckräume. Insbesondere kann die Vorspannkraft durch eine Kombination aus "ziehenden" Magneten und "drückender" Pneumatik sein. Zur Geräusch- und Verschleißreduzierung hat sich das Vorsehen von Federelement als vorteilhaft herausgestellt. Die Federelemente können dabei insbesondere auch entgegen der durch die Haltemagnete bereit gestellte Vorspannkraft wirken.

Die Haltemagnete sind dabei entweder am Gehäuse oder am Halter angeordnet. Den Haltemagneten korrespondieren ferromagnetische Abschnitte. Ferner ist denkbar, dass am Halter und an dem Gehäuse Haltemagnete angeordnet sind, insbesondere derart, dass sich deren magnetische Kräfte addieren.

Die Haltemagnete können dabei so angeordnet sein, dass sie den Halter durch magnetische Anziehung oder durch magnetische Abstoßung in die Grundstellung drängen.

Das Gehäuse kann so aufgebaut sein, dass es einen Zylinder vorsieht, wobei der Halter dann einen im Zylinder beweglich angeordneten Kolben umfasst. Die Haltemagnete können dann insbesondere am Gehäuse angeordnet sein und mit ihnen zugewandten Halteabschnitten, die am Kolben angeordnet sind, zusammenwirken. Insbesondere ziehen dabei die Haltemagnete die Halteabschnitte, beziehungsweise den Kolben, an und halten ihn somit in der Grundstellung.

Der Kolben kann dabei so ausgebildet sein, dass er einen aus dem Gehäuse ragenden Kolbenschaft aufweist, an welchem dann das Handhabungsgerät beziehungsweise Werkzeug angeordnet werden kann.

Insbesondere ist vorteilhaft, wenn der Kolbenschaft und das Gehäuse einen Mittendurchbruch aufweisen, so dass hierdurch Kabel oder Schläuche durchführbar sind oder dass Sichtraum für eine optische Überwachung bereitgestellt wird.

Insbesondere hat sich als vorteilhaft herausgestellt, wenn die Haltemagnete benachbart zum Kolbenschaft, um den Kolbenschaft herum am Gehäuse angeordnet sind. Die Haltemagnete wirken dann mit der Seite des Kolbens zusammen, an der der Kolbenschaft vorgesehen ist.

Bei einer Ausführungsform der Erfindung sind die Haltemagnete zylinderförmig ausgebildet. Die Haltemagnete können dabei insbesondere kreiszylindrisch ausgebildet sein, wobei dann deren Längsachsen insbesondere parallel zur Längsachse der Überlastschutzeinrichtung verlaufen können. Benachbarte Haltemagnete sind vorzugsweise immer abwechselnd so gepolt, dass der Nordpol eines Haltemagnets nach radial innen beziehungsweise nach radial außen und der Nordpol des benachbarten Haltemagnets nach radial außen beziehungsweise nach radial innen gerichtet ist. Dies führt dazu, dass sich über den magnetischen Rückschluss jeweils ringförmige Magnetfelder ausbilden können. Die Haltemagnete als solche können insbesondere als Haftmagnet-Greiferstäbe ausgebildet sein, die einen Hochenergiemagneten umfassen, sowie zwei Eisenpole, wobei der Hochenergiemagnet samt Eisenpole in einem insbesondere Messingtopfgehäuse untergebracht sein können. Der Hochenergiemagnet kann dabei scheibenartig ausgebildet sein und die beiden Eisenpole können im Wesentlichen zylindrisch ausgebildet sein, mit jeweils einer im Wesentlichen halbkreisförmigen Querschnittsfläche.

Zur positionsgenauen Anordnung des Halters am Gehäuse sind vorteilhafterweise am Gehäuse und/oder am Halter Zentriermittel vorhanden. Die Zentriermittel könnend dabei beispielsweise kugelförmige oder zylindrische Abschnitte beinhalten, die mit Gegenabschnitten, die beispielsweise als konusartige Ausnehmungen ausgebildet sein können, zusammenwirken.

Die Haltemagnete können vorzugsweise als Permanentmagnete ausgebildet sein; dennoch ist denkbar, dass zusätzlich oder ausschließlich Elektromagnete Verwendung finden. Bei Verwendung von Elektromagneten, insbesondere auch bei einer Kombination von Permanent- und Elektromagneten, kann die Haltekraft durch Abschalten einzelner Bereiche eingestellt werden.

Weitere Vorteile und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
- Figur 1: einen Querschnitt durch eine erfindungsgemäße Überlastschutzeinrichtung,
- Figur 2: einen Längsschnitt durch die Überlastschutzeinrichtung nach Figur 1 und
- Figur 3: einen weiteren Querschnitt durch die Überlastschutzeinrichtung nach Figur 1 und 2.

Die in den Figuren dargestellte Überlastschutzeinrichtung 10 umfasst ein Gehäuse 12 und ein im Gehäuse 12 beweglich angeordneten Halter 14. Das Gehäuse 12 dient zur Befestigung an einem nicht dargestellten Handhabungsgerät, beispielsweise einem Roboterarm. Am Halter 14 kann, über einen nicht dargestellten Flansch, ein Werkzeug oder eine Handhabungskomponente angebracht werden.

Das Gehäuse 12 ist im Wesentlichen zweiteilig aufgebaut und weist ein Grundteil 16 und ein Deckelteil 18 auf. Das Grundteil 16 und das Deckelteil 18 umgrenzen dabei einen Zylinder 20.

Der Halter 14 umfasst einen Kolben 22, der im Zylinder 20 beweglich angeordnet ist. Am Kolben 22 ist ein aus dem Zylinder 20 beziehungsweise Gehäuse herausragender Kolbenschaft 24 vorgesehen, an den ein Flansch anordenbar ist, an welchen wiederum das Werkzeug beziehungsweise eine Handhabungskomponente anordenbar ist.

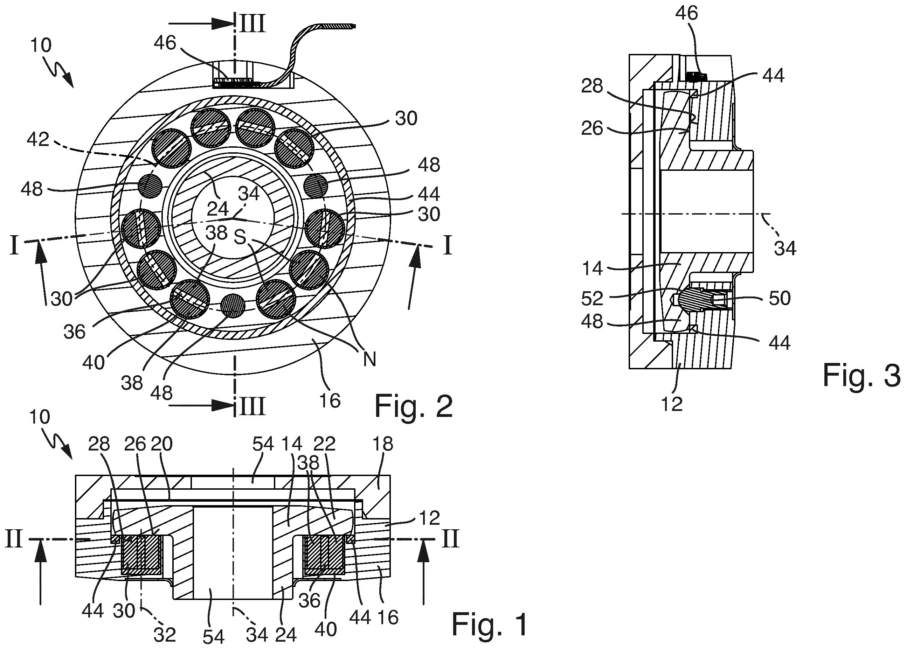

Der Halter 14 befindet sich in den in Figuren 1 und 3 gezeigten Schnitten in einer Grundstellung. Dabei liegt die den Kolbenschaft 24 umgebende Ringfläche 26 des Kolbens 22 an der ihr zugewandten, den Zylinder 20 begrenzenden Ringfläche 28 des Gehäuses 12 an. Wie aus Figur 1 deutlich wird, sind die Haltemagnete im Grundteil 16 so angeordnet, dass sie im Wesentlichen bündig mit der Ringfläche 28 des Gehäuses abschließen.

Die Überlastschutzeinrichtung 10 umfasst zudem eine Vorspanneinrichtung, die den Halter 14 in die in den Figuren 1 und 3 gezeigte Grundstellung drängt, beziehungsweise ihn in dieser hält. Die Vorspanneinrichtung sieht, wie insbesondere aus Figur 2 deutlich wird, insgesamt zehn Haltemagnete 30 vor, die im Gehäuse 12, beziehungsweise in dessen Grundteil 16, eingebracht sind. Die Haltemagnete weisen eine kreiszylindrische Grundform mit jeweils einer Magnetlängsachse 32 auf, wobei die Magnetlängsachsen 32 parallel zur Mittellängsachse 34 der Überlastschutzeinrichtung 10 verlaufen. Anstelle der Haltemagnete 30 kann auch eine anders ausgebildete Vorspanneinrichtung, die beispielsweise Federelemente oder Druckkammern umfasst Verwendung finden.

Wie aus Figur 2 deutlich wird, weisen die einzelnen Haltemagnete 30 jeweils einen Magnetkern 36 auf, der jeweils von zwei im Schnitt halbkreisförmig ausgebildeten Polabschnitten 38 umgeben ist. Der Magnetkern 36 und die Polabschnitte 38 sind in einem topfförmigen Magnetgehäuse 40 untergebracht. Wie ebenfalls aus Figur 2 deutlich wird, sind die Haltemagnete 30 auf einer Kreisbahn 42 um die Mittellängsachse 34 herum angeordnet. Die scheibenartig ausgebildeten Magnetkerne 36 sind dabei tangential zur Kreisbahn 42 verlaufend angeordnet. Dabei zeigen die Südpole von benachbarten Haltemagneten 30 abwechselnd nach radial innen und radial außen. Entsprechend zeigen die benachbarten jeweiligen Nordpole abwechselnd nach radial außen und radial innen.

Die Stärke und die Anzahl der Haltemagnete 30 ist dabei so gewählt, dass eine ausreichende Vorspannkraft zur Halterung des Halters 14 in der Grundstellung vorhanden ist.

Wie aus den Figuren 1 bis 3 deutlich wird, sieht das Gehäuse 12, beziehungsweise dessen Grundteil 16, einen umlaufenden Magnetleiter 44 in Form eines Stahlrings vor. Um den Magnetleiter 44 bildet sich, auf Grund der Magnetfelder der einzelnen Haltemagnete 30, ein eigenes Magnetfeld aus. Solange sich der Halter 14 in der Grundstellung befindet, ist dieses Magnetfeld relativ stabil. Sobald der Halter 14 seine Grundstellung verlässt, ändert sich das Magnetfeld des Magnetleiters 44.

Wie aus Figur 2 und 3 deutlich wird, ist am Gehäuse 12, beziehungsweise an dessen Grundteil 16, ein Magnetfeldsensor 46 angeordnet. Der Magnetfeldsensor 46 detektiert dabei das insbesondere vom Magnetleiter 44 erzeugte Magnetfeld. Ändert sich dieses Magnetfeld, so kann dies vom Magnetfeldsensor 46 detektiert werden. Der Magnetfeldsensor 46 erzeugt dann ein Schaltsignal, wenn sich das Magnetfeld des Magnetleiters 44 auf Grund eines Verlassens der Grundstellung des Halters 14 ändert. Insofern kann ohne zusätzliche Bauteile auf einfache, dennoch funktionstüchtige Art und Weise detektiert werden, wenn der Halter 14 seine Grundstellung verlässt.

Wie aus den Figuren 2 und 3 deutlich wird, sind Zentriermittel 48 vorgesehen, die den Halter 14 in der Grundstellung am Gehäuse 12 zentrieren. Die Zentriermittel 48 umfassen, wie aus dem Schnitt gemäß Figur 3 deutlich wird, grundteilseitig einen kugelkopfförmigen Stift 50, der in eine mit ihm korrespondierende, halterseitige Konusaussparung 52 eingreift. Insgesamt sind drei derartige Zentriermittel 48 vorgesehen.

Wie aus den Figuren ebenfalls deutlich wird, weist sowohl der Halter 14 als auch das Gehäuse 12 einen Mittendurchbruch 54 auf. Durch den Mitteldurchbruch 54 können beispielsweise Kabel, Schläuche oder dergleichen hindurchgeführt werden.

## Patentansprüche

1. Überlastschutzeinrichtung (10) mit einem Gehäuse (12), das für eine Befestigung an einem Handhabungsgerät bzw. eines Werkzeugs vorgesehen ist,
mit einem beweglich an dem Gehäuse (12) angeordneten Halter (14) zur Befestigung eines Werkzeugs beziehungsweise eines Handhabungsgeräts, mit einer Vorspanneinrichtung zur Erzeugung einer Vorspannkraft zwischen Gehäuse (12) und Halter (14), die den Halter (14) in eine Grundstellung drängt, und mit einer Schalteinrichtung, mit der ein Schaltsignal dann erzeugbar ist, wenn der Halter (14) seine Grundstellung verlässt, **dadurch gekennzeichnet,**
**dass** am Gehäuse (12) oder am Halter (14) Magnete (30) und ein von den Magneten magnetisierter Magnetleiter (44) vorgesehen sind,
**dass** die Schalteinrichtung wenigstens einen das Magnetfeld des Magnetleiters (44) erfassenden Magnetfeldsensor (46) umfasst,
wobei der Magnetfeldsensor (46) beim Verlassen der Grundstellung des Halters (14) eine Magnetfeldänderung des Magnetleiters (44) erfasst und dann ein Schaltsignal erzeugt.

2. Überlastschutzeinrichtung (10) nach Anspruch 1, **dadurch gekennzeichnet, dass** der Magnetleiter (44) umlaufend und/oder ringartig ausgebildet ist.

3. Überlastschutzeinrichtung nach Anspruch 1 oder 2, **dadurch gekennzeichnet, dass** die Magnete (30) auf einer Kreisbahn (42) um die Mittellängsachse (34) des Gehäuses (12) angeordnet sind.

4. Überlastschutzeinrichtung nach Anspruch 3, **dadurch gekennzeichnet, dass** der Magnetleiter (44) konzentrisch zu der Kreisbahn (42) verlaufend angeordnet ist.

5. Überlastschutzeinrichtung (10) nach einem der vorhergehenden Ansprüche, **dadurch gekennzeichnet, dass** die Magnete als Haltemagnete ausgebildet sind, , die den Halter (14) in der Grundstelllung halten.

6. Überlastschutzeinrichtung (10) nach Anspruch 5, **dadurch gekennzeichnet, dass** die Haltemagnete (30) derart angeordnet sind, dass sie den Halter (14) durch magentische Anziehung oder durch magentische Abstoßung in die Grundstellung drängen.

7. Überlastschutzeinrichtung nach Anspruch 6, **dadurch gekennzeichnet, dass** das Gehäuse (12) einen Zylinder (20) und dass der Halter (14) einen im Zylinder (20) beweglich angeordneten Kolben (22) umfasst, wobei die Haltemagnete (30) am Gehäuse (12) angeordnet sind und mit ihnen zugewandten Halteabschnitten des Kolbens (22) zusammen wirken.

8. Überlastschutzeinrichtung nach Anspruch 7, **dadurch gekennzeichnet, dass** der Kolben (22) einen aus dem Gehäuse ragenden Kolbenschaft (24) aufweist.

9. Überlastschutzeinrichtung nach Anspruch 8, **dadurch gekennzeichnet, dass** Kolbenschaft (24) und das Gehäuse (12) einen Mittendurchbruch (54) aufweist.

10. Überlastschutzeinrichtung nach Anspruch 8 oder 9, **dadurch gekennzeichnet, dass** die Haltemagnete (30) benachbart zum Kolbenschaft, um den Kolbenschaft (24) herum am Gehäuse (12) angeordnet sind.

11. Überlastschutzeinrichtung nach mindestens einem der vorhergehenden Ansprüche, **dadurch gekennzeichnet**, dassdie Vorspanneinrichtung zur Erzeugung einer Vorspannkraft einen druckbeaufschlagbaren Druckraum umfasst.

12. Überlastschutzeinrichtung nach mindestens einem der vorhergehenden Ansprüche, **dadurch gekennzeichnet, dass** die Vorspanneinrichtung zur Erzeugung einer Vorspannkraft Druckfedern umfasst.

13. Überlastschutzeinrichtung nach mindestens einem der vorhergehenden Ansprüche, **dadurch gekennzeichnet, dass** am Gehäuse (12) und/oder am Halter (14) Zentriermittel (48) vorgesehen sind.

14. Überlastschutzeinrichtung nach mindestens einem der vorhergehenden Ansprüche, **dadurch gekennzeichnet, dass** die Haltemagnete (30) als Permanentmagnete und/oder als Elektromagnete ausgebildet sind.

## Claims

1. An overload protection device (10) having a housing (12) which is provided for attachment to a handling device and a tool respectively,
having a retainer (14) disposed movably on the housing (12) to attach a tool and a handling device respectively, having a preloading device to generate a preloading force between the housing (12) and the retainer (14) which urges the retainer (14) to a home position and having switchgear by means of which a switching signal is generable when the retainer (14) leaves its home position, **characterized in that** magnets (30) and a magnetic conductor (44) magnetizable by said magnets are provided on the housing (12) or on the retainer (14),
that the switchgear includes at least one magnetic field sensor (46) sensing the magnetic field of the magnetic conductor (44),
wherein when the retainer (14) leaves its home position the magnetic field sensor (46) senses a change in the magnetic field of the magnetic conductor (44) and then generates a switching signal.

2. Overload protection device (10) according to Claim 1, **characterized in that** the magnetic conductor (44) is circumferential and/or ring-like in design.

3. Overload protection device according to Claim 1 or 2, **characterized in that** the magnets (30) are disposed along a circular path (42) about the central longitudinal axis (34) of the housing (12).

4. Overload protection device according to Claim 3, **characterized in that** the magnetic conductor (44) is disposed so as to extend concentrically relative to the circular path (42).

5. Overload protection device (10) according to any of the preceding claims, **characterized in that** the magnets are designed as holding magnets which hold the retainer (14) in the home position.

6. Overload protection device (10) according to Claim 5, **characterized in that** the holding magnets (30) are disposed such that they urge the retainer (14) to the home position by magnetic attraction or magnetic repulsion.

7. Overload protection device according to any Claim 6, **characterized in that** the housing (12) provides a cylinder (20) and that the retainer (14) includes a piston (22) disposed movably inside the cylinder (20), wherein the holding magnets (30) are disposed on the housing (12) and cooperate with holding portions of the piston (22) which face them.

8. Overload protection device according to Claim 7, **characterized in that** the piston (22) comprises a piston skirt (24) projecting from the housing.

9. Overload protection device according to Claim 8, **characterized in that** the piston skirt (24) and the housing (12) comprise a central aperture (54).

10. Overload protection device according to Claim 8 or 9, **characterized in that** the holding magnets (30) are disposed adjacent to the piston skirt, around the piston skirt (24) on the housing (12).

11. Overload protection device according to at least one of the preceding claims, **characterized in that** the preloading device to generate a preloading force includes a pressurizable pressure chamber.

12. Overload protection device according to at least one of the preceding claims, **characterized in that** the preloading device to generate a preloading force includes compression springs.

13. Overload protection device according to at least one of the preceding claims, **characterized in that** centering means (48) are provided on the housing (12) and/or on the retainer (14).

14. Overload protection device according to at least one of the preceding claims, **characterized in that** the holding magnets (30) are designed as permanent magnets and/or as electromagnets.

## Revendications

1. Dispositif de protection contre des surcharges (10) comprenant un boîtier (12), qui est destiné à être fixé sur un appareil de manipulation ou un outil,
comprenant un support (14) monté mobile sur le boîtier (12) et destiné à fixer un outil ou un appareil de manipulation, un dispositif de précontrainte destiné à générer une force de précontrainte entre le boîtier (12) et le support (14), qui pousse le support (14) dans une position de base, et un dispositif de commutation permettant de générer un signal de commutation lorsque le support (14) quitte sa position de base, **caractérisé en ce que**
des aimants (30) et un conducteur magnétique (44) magnétisé par les aimants sont situés sur le boîtier (12) ou sur le support (14),
**en ce que** le dispositif de commutation comprend au moins un capteur de champ magnétique (46) détectant le champ magnétique du conducteur magnétique (44),
le capteur de champ magnétique (46), lorsque le support (14) quitte sa position de base, détectant une modification du champ magnétique du conducteur magnétique (44) puis générant un signal de commutation.

2. Dispositif de protection contre des surcharges (10) selon la revendication 1, **caractérisé en ce que** le conducteur magnétique (44) présente une conception circulaire et/ou annulaire.

3. Dispositif de protection contre des surcharges selon la revendication 1 ou 2, **caractérisé en ce que** les aimants (30) sont agencés sur une trajectoire circulaire (42) autour de l'axe longitudinal médian (34) du boîtier (12).

4. Dispositif de protection contre des surcharges selon la revendication 3, **caractérisé en ce que** le conducteur magnétique (44) est agencé de manière à s'étendre de façon concentrique par rapport à la trajectoire circulaire (42).

5. Dispositif de protection contre des surcharges (10) selon l'une quelconque des revendications précédentes, **caractérisé en ce que** les aimants sont réalisés sous la forme d'aimants de retenue qui retiennent le support (14) dans la position de base.

6. Dispositif de protection contre des surcharges (10) selon la revendication 5, **caractérisé en ce que** les aimants de retenue (30) sont agencés de telle manière qu'ils poussent le support (14) dans la position de base par attraction magnétique ou par répulsion magnétique.

7. Dispositif de protection contre des surcharges selon la revendication 6, **caractérisé en ce que** le boîtier (12) comporte un cylindre (20) et **en ce que** le support (14) comporte un piston (22) monté mobile dans le cylindre (20), les aimants de retenue (30) étant agencés sur le boîtier (12) et coopérant avec des sections de retenue du piston (22) tournées vers ces derniers.

8. Dispositif de protection contre des surcharges selon la revendication 7, **caractérisé en ce que** le piston (22) comprend une tige de piston (24) faisant saillie du boîtier.

9. Dispositif de protection contre des surcharges selon la revendication 8, **caractérisé en ce que** la tige de piston (24) et le boîtier (12) comprennent un passage central (54).

10. Dispositif de protection contre des surcharges selon la revendication 8 ou 9, **caractérisé en ce que** les aimants de retenue (30) sont agencés sur le boîtier (12) autour de la tige de piston (24), au voisinage de la tige de piston.

11. Dispositif de protection contre des surcharges selon au moins l'une des revendications précédentes, **caractérisé en ce que** le dispositif de précontrainte destiné à générer une force de précontrainte comprend une chambre de pression pouvant être sollicitée en pression.

12. Dispositif de protection contre des surcharges selon au moins l'une des revendications précédentes, **caractérisé en ce que** le dispositif de précontrainte destiné à générer une force de précontrainte comprend des ressorts de pression.

13. Dispositif de protection contre des surcharges selon au moins l'une des revendications précédentes, **caractérisé en ce que** des moyens de centrage (48) sont prévus sur le boîtier (12) et/ou sur le support (14).

14. Dispositif de protection contre des surcharges selon au moins l'une des revendications précédentes, **caractérisé en ce que** les aimants de retenue (30) sont réalisés sous la forme d'aimants permanents et/ou sous la forme d'électroaimants.
